# EUROPEAN PATENT SPECIFICATION

(11) **EP 4 411 138 B1**
(45) Date of publication and mention of the grant of the patent: **10.06.2026**
(21) Application number: 23154845.4
(22) Date of filing: 03.02.2023
(51) Int. Cl.: F04B 39/16, F04C 29/02, B01D 46/24, B01D 46/42

(54) **OIL SEPARATOR FOR COMPRESSOR**
ÖLABSCHEIDER FÜR KOMPRESSOR
SÉPARATEUR D'HUILE POUR COMPRESSEUR

(43) Date of publication of application: 07.08.2024
(73) Proprietor: Gardner Denver Ltd., Worcestershire B98 0DS (GB)
(72) Inventor: Govier, David, Dormston (GB)
(74) Representative: Murgitroyd & Company

(56) References cited:
- US-A- 5 899 667
- US-A1- 2017 209 831
- US-B1- 6 431 210

## Description

### Field of the Invention

The present invention relates to the field of oil-lubricated compressors for producing compressed air and other gases. More specifically, the present invention is a valve used in conjunction with an oil separator within an oil-lubricated compressor.

### Background of the Invention

Oil-lubricated compressors are used in numerous fields in which compressed air or other similar gases are supplied to one or more components, devices or systems downstream of the compressor. Examples of such fields include industrial applications, vehicle braking and suspension systems, dry and bulk goods handling and pneumatic tools. In these compressors, oil separators are employed, which receive the compressed air or gas from the compressor before the air or gas flows to the downstream component(s). A filter element is housed within the separator to ensure that lubricating oil is separated from the air/gas and then returned to an oil reservoir. In this way, it is ensured that the lines and components downstream of the compressor do not become contaminated with oil, thus reducing the chance of damage or failure of the downstream component(s).

In many of these fields of application the running time duty cycle of the compressor is relatively short, with frequent starting and stopping. This is especially the case in many transport-related applications, such as for buses and trucks for example, where the compressor is typically supplying air to components such as brakes, suspension and doors which frequently switch between "on" and "off", or "standby", modes. When one or more of the components downstream of the compressor moves to the off or standby mode, the line pressure downstream of the compressor is rapidly vented or purged prior to the actual compressor stop occurring. As a consequence this creates a pressure drop across the separator and any oil captured on the separator filter but yet to return back to the oil reservoir may be forced downstream through the filter element as a result, causing very high oil carry over. Each time there is rapid venting in this manner, oil is passed into the downstream fluid system, quickly resulting in contamination and loss of oil from the compressor system prior to scheduled servicing.

One proposed solution to this issue has been to place one or more protection valves downstream of the compressor. However, these valves are less able to react due to their remote positioning from the compressor and separator, and in most cases increase the compressor internal pressure.

It is an aim of the present invention to obviate or mitigate this disadvantage with existing arrangements.

US6431210 discloses an inlet valve for use in a gas compressor, the inlet valve including a piston movable within a housing chamber toward and away from a housing inlet and a valve disc movable with the piston. The valve disc includes an aperture for selectively providing air flow from the housing inlet into the chamber, and a flexible member engageable with the valve disc to close the aperture.

### Summary of the Invention

According to a first aspect of the present invention there is provided a separator for an oil-lubricated compressor, the separator comprising:
a separator housing, a separator inlet connectable to the compressor, a separator outlet and a separator chamber defined in the separator housing, the separator chamber in fluid communication with the separator inlet and the separator outlet;
a hollow valve body within the separator outlet and moveable between a first open position and a second closed position; and
a biasing member which biases the valve body away from the second closed position;
wherein the valve body has an open end within the separator outlet, a closed end located outside the separator outlet in the separator chamber, and at least one primary fluid aperture extending through a wall of the valve body so as to selectively permit fluid flow from the separator chamber into the separator outlet, wherein the at least one primary fluid aperture is at least partially exposed to the separator chamber when the valve body is not in the second position; and
wherein the valve body has at least one secondary fluid aperture extending through the closed end such that the separator chamber is still in fluid communication with the separator outlet when the valve body is in the second closed position.

Preferably, the valve body has a plurality of primary fluid apertures spaced around the perimeter of the valve body.

Preferably, the at least one secondary fluid aperture has a secondary fluid inlet in communication with the separator chamber, a secondary fluid outlet in communication with the separator outlet, and a throat portion intermediate the secondary fluid inlet and secondary fluid outlet, the throat portion having a cross sectional area which is less than that of either the secondary fluid inlet and the secondary fluid outlet.

Preferably, the total cross sectional area of the at least one secondary fluid aperture is less than the total cross sectional area of the at least one primary fluid aperture.

The separator may further comprise a filter element removably located in the housing such that fluid flowing into the separator chamber through the separator inlet flows through the filter element to the separator outlet. Preferably, the filter element and housing define an annular space into which fluid flows from the separator inlet.

Preferably, the separator outlet comprises a tubular member having a first end located in the separator chamber and a second end connectable to the compressor.

According to a second aspect of the present invention there is provided an oil-lubricated fluid compressor comprising a separator according to the first aspect.

According to a third aspect of the present invention there is provided a pneumatic system comprising at least one pneumatic device and an oil-lubricated fluid compressor according to the second aspect.

### Brief Description of the Drawings

A preferred embodiment of the present invention will now be described, by way of example only, with reference to the following drawings:
Figure 1 is a vertical section through a separator for an oil-lubricated fluid compressor;
Figure 2 is the section view of figure 1, illustrating the flow path of fluids through the separator when a separator valve is open;
Figure 3 is a section view of the separator of figures 1 and 2 when the separator valve is closed;
Figure 4 is a detail view of an discharge tube and separator valve of the separator;
Figure 5 is a detail view of a vertical section trough the discharge tube and separator valve of Figure 4; and
Figure 6 is a schematic diagram of an example pneumatic circuit incorporating the separator shown in the preceding figures.

### Detailed Description of the Drawings

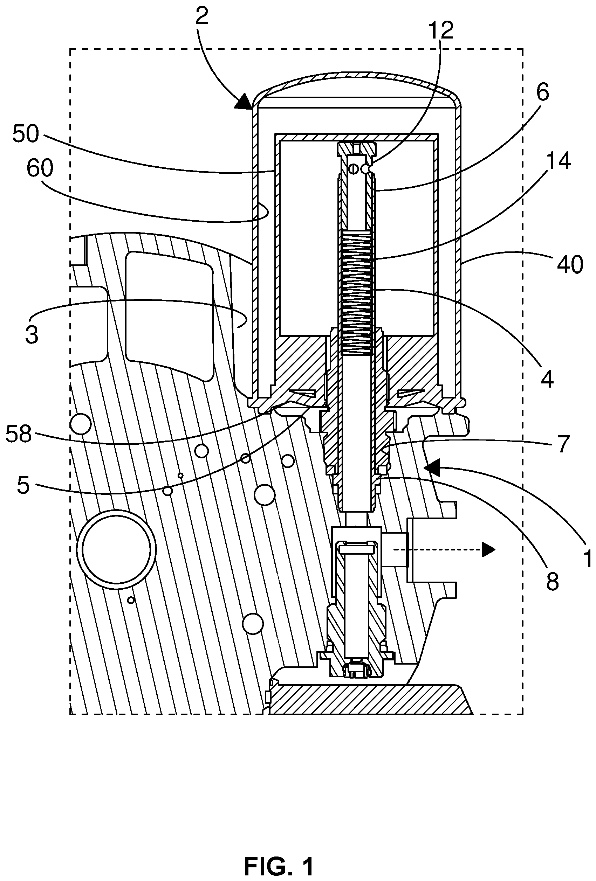

Figures 1-3 show an oil-lubricated compressor 1, which may be used to compress air or another suitable gas such as natural gas or sour gas, for example. A separator 2 is connectable to the compressor 1 in order to separate lubricating oil from the compressed air/gas before the air/gas is supplied to one or more components or devices downstream.

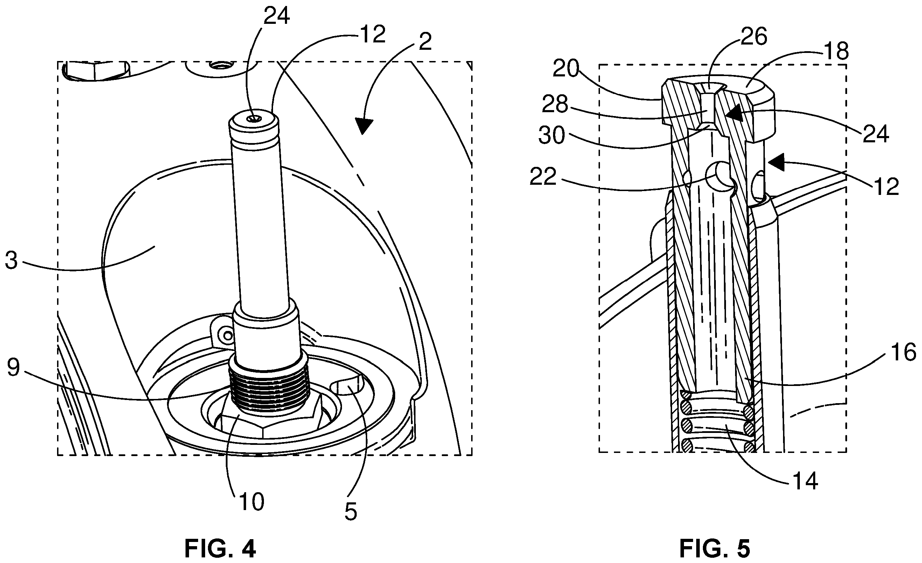

As best seen in Figure 4, the compressor 1 has a separator recess 3 in an outer surface thereof, with a compressed air/gas inlet passage 5 and a compressed air/gas outlet passage 7 in fluid communication with the recess 3. The separator 2 comprises an elongate discharge tube 4 which has a first end 6 remote from the recess 3 and a second end 8 which is connectable into the fluid outlet passage 7 in the recess 3. When in position the discharge tube 4 is fixed in position with a threaded adaptor or locking nut 10, as shown in Figure 4.

Referring to Figures 4 and 5 in particular a valve member 12 is mounted in the first end 6 of the discharge tube 4. The valve member 12 can slide axially up and down inside the discharge tube 4, with a biasing member present so as to return the valve member 12 to a first open position seen in Figure 5. The biasing member may be any suitable member which can provide a return force to the valve member but in the preferred embodiment illustrated it is a compression spring 14, which sits in an uncompressed state until the valve member 12 presses down upon it.

The valve member 12 has a hollow body with a first valve end 16 which is open and located inside the discharge tube 4. A second valve end 18 is capped and is located outside of the first end 6 of the discharge tube 4. The second valve end 18 has an annular flange 20 which has a greater diameter than that of the remainder of the valve member 12, thus ensuring that the valve member 12 cannot fully enter the discharge tube 4.

The wall of the valve member 12 extending between the first and second valve ends 16,18 has at least one primary valve aperture 22. Preferably, there are a plurality of primary valve apertures and most preferably there are four such apertures equidistantly spaced about the circumference of the valve member 12. These primary valve apertures 22 are located adjacent the second valve end 18. The primary valve apertures 22 permit fluid flow from the exterior to the interior of the valve member 12 when the valve member is in the open position.

The second valve end 18 is described above as "capped", which in this instance means that the second valve body end is substantially closed to fluid flow as though a cap or plug were located in that second valve end 18. However, it is to be understood that the second valve end 18 is preferably integrally formed with the remainder of the valve member 12 as opposed to being a separate element. Furthermore, the second valve end 18 has a secondary valve aperture 24 which permits some fluid flow from the exterior to interior of the valve member 12. The secondary valve aperture 24 may comprise a secondary valve inlet 26, secondary valve outlet opening 30 into the interior of the valve member 12, and an intermediate throat 28 extending between the secondary valve inlet and outlet 26,30. The intermediate throat 28 may have a cross sectional area which is less than those of both the second valve inlet and outlet 26,30.

Referring again to Figures 1-3 the separator 2 comprises a separator housing 40 having an open end and an interior which defines a separator chamber. The separator may further comprise a hollow filter element 50 removably mounted to the separator housing 40 so that it lies inside the separator chamber, whereby an annular volume 60 is defined between the two. One of the separator housing 40 and filter element 50 has a separator inlet 58 which is in fluid communication with the compressed fluid inlet passage 5 of the compressor 1 when the separator 2 is mounted in the separator recess 3 of the compressor 1. The separator 2 may be mounted in the compressor recess 3 by engaging an internal thread of the filter element or separator housing with an external threaded portion 9 of the discharge tube 4, which is visible in Figure 4. As can be seen, once the separator 2 is mounted in the compressor recess 3 the discharge tube 4 extends upwards from the fluid outlet passage 7 of the compressor 1 into the interior of the filter element 50.

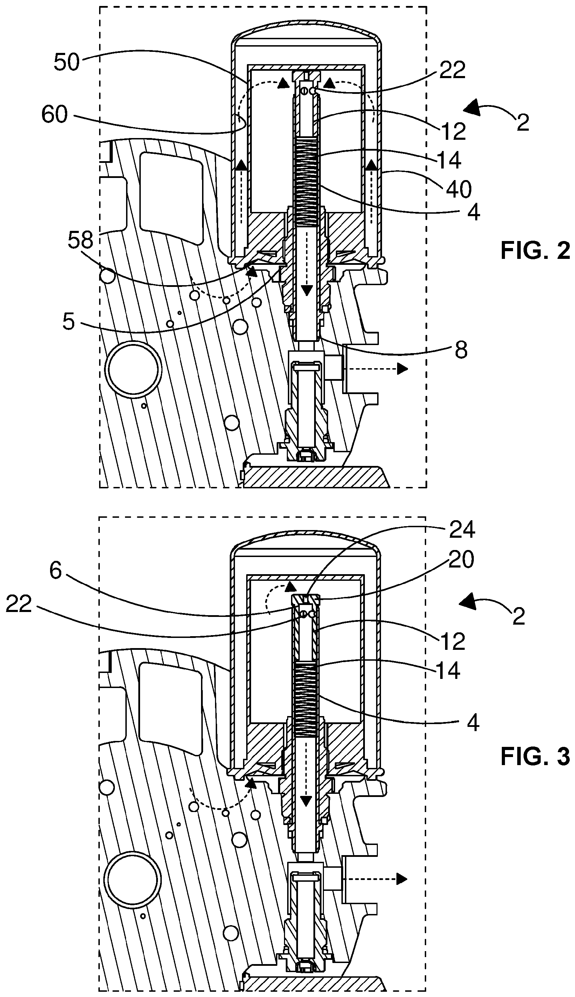

The manner in which the separator 2 operates will now be described, with particular reference to figures 2 and 3. Figure 2 shows the separator 2 in its normal operating state. The compression spring 14 is pushing the valve member 12 in an upward direction which means that the primary valve apertures 22 are exposed and the valve is fully open.

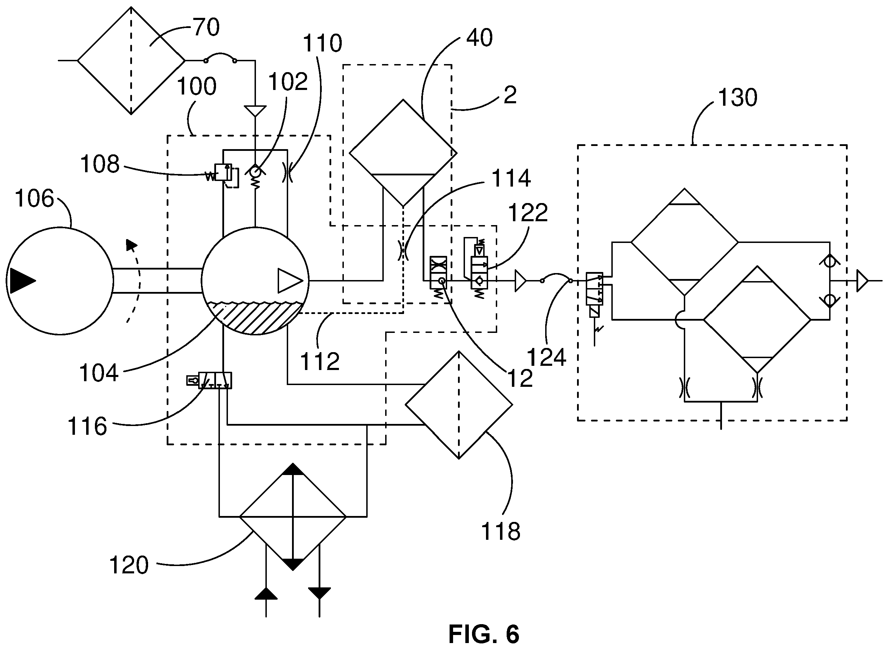

A mixed flow of compressed air/gas and oil will flow through the compressed fluid inlet passage 5 of the compressor and hence through the separator inlet 58. From there the flow will pass up the annular volume 60 between the separator housing 40 and the filter element 50. The compressed air/gas then passes through the filter element 50, which captures any oil present in the air/gas flow. The captured oil will then drop under gravity to the bottom of the separator housing 40, and pass out of the separator housing via an oil return passage (not shown in Figures 2 and 3) to an oil reservoir. More detail on such addition components of a pneumatic system will be described below in respect of Figure 6.

As the valve member 12 is being held open by the upward force of the compression spring 14 the compressed air/gas passing into the volume inside the filter element 50 will flow through the primary valve apertures 22 and into the discharge tube 4. The air/gas then flows down the tube 4, out of the second end 8 of the tube 4 and away to one or more downstream components via additional passages and/or valves in the compressor itself.

Figure 3 shows a second state of the separator 2 when it is closed, or at least partially closed. In pneumatic systems or circuits it is often necessary for the components downstream of the compressor to be rapidly vented or purged prior to the compressor being stopped. When this occurs there will be a rapid drop in pressure in the system downstream of the separator but the pressure upstream will be unchanged whilst the compressor continues to run. This pressure variation across the separator forces the valve member 12 downwards against the force of the compression spring 14 and into the state shown in Figure 3.

The downward movement of the valve member 12 will be arrested as the flange 20 comes into contact with the top end 6 of the discharge tube 4. However, the downward movement of the valve member 12 means that the primary valve apertures 22 are now inside the discharge tube 4 and so compressed air/gas cannot pass into the discharge tube 4 via those primary apertures 22. As a consequence there is no surge of compressed air/gas through the filter element, which stops any undesirable oil carry over through the filter element and into the system downstream.

The secondary valve aperture 24 in the second valve end 18 will allow a reduced amount of compressed air/gas to still flow into the discharge tube 4 even though the valve member 12 is effectively in a closed position. Where the compressor continues to run following a rapid depressurisation of the system there will be very low compressing pressures, which can also lead to increased oil consumption. In these conditions, the valve member will remain closed until the compressor is stopped or the system pressure is restored to its non-vented state or pressure. In these conditions, the secondary valve aperture 24 would allow sufficient flow to satisfy the system air/gas demand, but would also provide an additional pressure restriction. This pressure restriction raises the compressor internal pressure to desirable higher levels and again eliminates the potential for oil carry over.

An exemplary pneumatic circuit employing the separator of the present invention is shown in Figure 6. A compressor 100 has a one-way intake valve 102 in fluid communication with an intake filter 70, through which air or another suitable gas is supplied. From the intake valve 102 the air/gas is drawn into a compression chamber 104. Within the compression chamber 104 is at least one compression element (not shown), which may be a reciprocating piston or rotating screw, for example. The at least one compression element is driven by a motor drive 106, which may be an electric motor drive.

The compressor 100 also includes a pressure relief valve 108 for the compression chamber 104, as well as a restricted vent 110 to atmosphere for the compression chamber 104.

Compressed air/gas exits the compression chamber 104 and flows to the separator 2 of the present invention, and more specifically the separator housing 40. Immediately downstream of the separator housing 40 on the compressed air/gas circuit is the valve member 12, whilst a return line 112 can return oil captured in the separator housing 40 back to the compression chamber 104 via an oil restrictor 114. Oil flow to and from the compression chamber 104 goes through a thermal bypass valve 116 and an oil filter 118. If the oil temperature is deemed to be too high the thermal bypass valve 116 can be selectively actuated in order to direct oil to an oil cooler 120 before it passes through the oil filter 118 and back to the compression chamber 104.

Once the compressed air/gas has passed through the separator 2 it is directed through a minimum pressure valve 122, which ensures that a predetermined minimum pressure is maintained within the system upsteam of the valve 122. An air or gas drier 130 may be connected to a compressor outlet 124 so that the air or other gas is free of moisture prior to being sent downstream to one or more pneumatic components.

The separator of the present invention restricts or stops the outlet air or gas flow in the event of a depressurisation, venting or purge event downstream. This prevents the carryover of lubricating oil into a downstream pneumatic system or component(s) caused by the pressure variation across the separator. It is also does so in a cost-effective and efficient manner without the need to employ downstream protection valves.

Modifications and improvements may be incorporated without departing from the scope of the present invention as defined by the appended claims.

## Claims

1. A separator for an oil-lubricated compressor, the separator comprising:
a separator housing (40), a separator inlet (58) connectable to the compressor (1), a separator outlet (4) and a separator chamber defined in the separator housing, the separator chamber in fluid communication with the separator inlet and the separator outlet;
a hollow valve body (12) within the separator outlet and moveable between a first open position and a second closed position; and
a biasing member (14) which biases the valve body (12) away from the second closed position;
wherein the valve body (12) has an open end (16) within the separator outlet, a closed end (18) located outside the separator outlet in the separator chamber, and at least one primary fluid aperture (22) extending through a wall of the valve body (12) so as to selectively permit fluid flow from the separator chamber into the separator outlet, wherein the at least one primary fluid aperture is at least partially exposed to the separator chamber when the valve body is not in the second position; and
wherein the valve body (12) has at least one secondary fluid aperture (24) extending through the closed end (18) such that the separator chamber is still in fluid communication with the separator outlet when the valve body is in the second closed position.

2. The separator of claim 1, wherein the valve body (12) has a plurality of primary fluid apertures (22) spaced around the perimeter of the valve body.

3. The separator of either preceding claim, wherein the at least one secondary fluid aperture (24) has a secondary fluid inlet (26) in communication with the separator chamber, a secondary fluid outlet (30) in communication with the separator outlet, and a throat portion (28) intermediate the secondary fluid inlet and secondary fluid outlet, the throat portion having a cross sectional area which is less than that of either the secondary fluid inlet and the secondary fluid outlet.

4. The separator of any preceding claim, wherein the total cross-sectional area of the at least one secondary fluid aperture (24) is less than the total cross-sectional area of the at least one primary fluid aperture (22).

5. The separator of any preceding claim, further comprising a filter element (50) removably located in the housing (40) such that fluid flowing into the separator chamber through the separator inlet (58) flows through the filter element to the separator outlet.

6. The separator of claim 5, wherein the filter element (50) and housing (40) define an annular space into which fluid flows from the separator inlet (58).

7. The separator of any preceding claim, wherein the separator outlet (4) comprises a tubular member having a first end located in the separator chamber and a second end connectable to the compressor (1).

8. An oil-lubricated fluid compressor (1) comprising a separator (2) according to any preceding claim.

9. A pneumatic system comprising at least one pneumatic device and an oil-lubricated fluid compressor (1) according to claim 8.

## Patentansprüche

1. Ein Abscheider für einen ölgeschmierten Kompressor, wobei der Abscheider Folgendes beinhaltet:
ein Abscheidergehäuse (40), einen mit dem Kompressor (1) verbindbaren Abscheidereinlass (58), einen Abscheiderauslass (4) und eine in dem Abscheidergehäuse definierte Abscheiderkammer, wobei die Abscheiderkammer mit dem Abscheidereinlass und dem Abscheiderauslass in Fluidkommunikation steht;
einen hohlen Ventilkörper (12) innerhalb des Abscheiderauslasses, der zwischen einer ersten, offenen Stellung und einer zweiten, geschlossenen Stellung beweglich ist; und
ein Vorspannelement (14), das den Ventilkörper (12) von der zweiten, geschlossenen Stellung weg vorspannt;
wobei der Ventilkörper (12) ein offenes Ende (16) innerhalb des Abscheiderauslasses, ein geschlossenes Ende (18), das außerhalb des Abscheiderauslasses in der Abscheiderkammer angeordnet ist, und mindestens einen primären Fluiddurchlass (22) aufweist, der sich durch eine Wand des Ventilkörpers (12) erstreckt, um selektiv einen Fluidstrom aus der Abscheiderkammer in den Abscheiderauslass zuzulassen, wobei der mindestens eine primäre Fluiddurchlass mindestens teilweise gegenüber der Abscheiderkammer offenliegt, wenn sich der Ventilkörper nicht in der zweiten Stellung befindet; und
wobei der Ventilkörper (12) mindestens einen sekundären Fluiddurchlass (24) aufweist, der sich durch das geschlossene Ende (18) erstreckt, sodass die Abscheiderkammer immer noch mit dem Abscheiderauslass in Fluidkommunikation steht, wenn sich der Ventilkörper in der zweiten, geschlossenen Stellung befindet.

2. Abscheider gemäß Anspruch 1, wobei der Ventilkörper (12) eine Vielzahl von primären Fluiddurchlässen (22) aufweist, die um den Umfang des Ventilkörpers herum mit Abstand angeordnet sind.

3. Abscheider gemäß einem der vorhergehenden Ansprüche, wobei der mindestens eine sekundäre Fluiddurchlass (24) einen sekundären Fluideinlass (26) in Kommunikation mit der Abscheiderkammer, einen sekundären Fluidauslass (30) in Kommunikation mit dem Abscheiderauslass und einen Halsabschnitt (28) zwischen dem sekundären Fluideinlass und dem sekundären Fluidauslass aufweist, wobei der Halsabschnitt eine Querschnittsfläche aufweist, die kleiner als die des sekundären Fluideinlasses und die des sekundären Fluidauslasses ist.

4. Abscheider gemäß einem der vorhergehenden Ansprüche, wobei die Gesamtquerschnittsfläche des mindestens einen sekundären Fluiddurchlasses (24) kleiner als die Gesamtquerschnittsfläche des mindestens einen primären Fluiddurchlasses (22) ist.

5. Abscheider gemäß einem der vorhergehenden Ansprüche, der ferner ein Filterelement (50) beinhaltet, das entfernbar in dem Gehäuse (40) angeordnet ist, sodass Fluid, das durch den Abscheidereinlass (58) in die Abscheiderkammer strömt, durch das Filterelement zu dem Abscheiderauslass strömt.

6. Abscheider gemäß Anspruch 5, wobei das Filterelement (50) und das Gehäuse (40) einen ringförmigen Raum definieren, in den Fluid von dem Abscheidereinlass (58) strömt.

7. Abscheider gemäß einem der vorhergehenden Ansprüche, wobei der Abscheiderauslass (4) ein röhrenförmiges Element beinhaltet, das ein in der Abscheiderkammer angeordnetes erstes Ende und ein mit dem Kompressor (1) verbindbares zweites Ende aufweist.

8. Ein ölgeschmierter Fluidkompressor (1), der einen Abscheider (2) gemäß einem der vorhergehenden Ansprüche beinhaltet.

9. Ein pneumatisches System, das mindestens eine pneumatische Vorrichtung und einen ölgeschmierten Fluidkompressor (1) gemäß Anspruch 8 beinhaltet.

## Revendications

1. Un séparateur pour un compresseur lubrifié à l'huile, le séparateur comprenant :
un boîtier de séparateur (40), une entrée de séparateur (58) pouvant être raccordée au compresseur (1), une sortie de séparateur (4) et une chambre de séparateur définie dans le boîtier de séparateur, la chambre de séparateur étant en communication fluidique avec l'entrée de séparateur et la sortie de séparateur ;
un corps de soupape creux (12) à l'intérieur de la sortie de séparateur et déplaçable entre une première position ouverte et une deuxième position fermée ; et
un organe de sollicitation (14) qui sollicite le corps de soupape (12) de manière à l'éloigner de la deuxième position fermée ;
dans lequel le corps de soupape (12) a une extrémité ouverte (16) à l'intérieur de la sortie de séparateur, une extrémité fermée (18) située à l'extérieur de la sortie de séparateur dans la chambre de séparateur, et au moins un orifice pour fluide principal (22) s'étendant à travers une paroi du corps de soupape (12) de façon à permettre sélectivement un écoulement de fluide depuis la chambre de séparateur jusque dans la sortie de séparateur, dans lequel l'au moins un orifice pour fluide principal est au moins partiellement exposé à la chambre de séparateur lorsque le corps de soupape n'est pas dans la deuxième position ; et
dans lequel le corps de soupape (12) a au moins un orifice pour fluide secondaire (24) s'étendant à travers l'extrémité fermée (18) de sorte que la chambre de séparateur est toujours en communication fluidique avec la sortie de séparateur lorsque le corps de soupape est dans la deuxième position fermée.

2. Le séparateur de la revendication 1, dans lequel le corps de soupape (12) a une pluralité d'orifices pour fluide principaux (22) répartis autour du périmètre du corps de soupape.

3. Le séparateur de l'une ou l'autre revendication précédente, dans lequel l'au moins un orifice pour fluide secondaire (24) a une entrée de fluide secondaire (26) en communication avec la chambre de séparateur, une sortie de fluide secondaire (30) en communication avec la sortie de séparateur, et une partie d'étranglement (28) intermédiaire entre l'entrée de fluide secondaire et la sortie de fluide secondaire, la partie d'étranglement ayant une aire de section transversale qui est inférieure à celle soit de l'entrée de fluide secondaire soit de la sortie de fluide secondaire.

4. Le séparateur de n'importe quelle revendication précédente, dans lequel l'aire de section transversale totale de l'au moins un orifice pour fluide secondaire (24) est inférieure à l'aire de section transversale totale de l'au moins un orifice pour fluide principal (22).

5. Le séparateur de n'importe quelle revendication précédente, comprenant en outre un élément formant filtre (50) situé de manière amovible dans le boîtier (40) de sorte que du fluide s'écoulant jusque dans la chambre de séparateur à travers l'entrée de séparateur (58) s'écoule à travers l'élément formant filtre jusque dans la sortie de séparateur.

6. Le séparateur de la revendication 5, dans lequel l'élément formant filtre (50) et le boîtier (40) définissent un espace annulaire dans lequel du fluide s'écoule depuis l'entrée de séparateur (58).

7. Le séparateur de n'importe quelle revendication précédente, dans lequel la sortie de séparateur (4) comprend un organe tubulaire ayant une première extrémité située dans la chambre de séparateur et une deuxième extrémité pouvant être raccordée au compresseur (1).

8. Un compresseur de fluide lubrifié à l'huile (1) comprenant un séparateur (2) selon n'importe quelle revendication précédente.

9. Un système pneumatique comprenant au moins un dispositif pneumatique et un compresseur de fluide lubrifié à l'huile (1) selon la revendication 8.
